# EUROPEAN PATENT APPLICATION

(11) **EP 0 766 927 A1**
(43) Date of publication of application: **09.04.1997**
(21) Application number: 96307011.5
(22) Date of filing: 26.09.1996
(51) Int. Cl.: A23L 1/237

(54) **Dietary salt mixture poor in sodium comprising also potassium, magnesium and a mixture of vegetables and spices**

(30) Priority: 06.10.1995 HU 9502922
(71) Applicant: Gyarmathy Nemes, Erzsebet, Dr., 1023 Budapest (HU); Farsang, Csaba, Dr., 1112 Budapest (HU)
(72) Inventor: Gyarmathy Nemes, Erzsebet, Dr., 1023 Budapest (HU); Farsang, Csaba, Dr., 1112 Budapest (HU)
(74) Representative: Hedley, Nicholas James Matthew

(57) **Abstract**

The invention relates to a salt mixture poor in sodium, comprising also potassium and magnesium and a mixture of vegetables and spices and if desired nutritionally acceptable additives for the substitution of dietary salt, which comprises
20 to 40 % by weight of sodium chloride,
20 to 40 % by weight of potassium chloride,
10 to 20 % by weight of potassium citrate,
0.6 to 1 % by weight of nutritionally acceptable organic magnesium salt,
10 to 15 % by weight of a mixture of vegetables and spices,
5 to 8 % by weight of sodium glutamate and, if desired,
0.03 to 0.20 % by weight of nutritionally acceptable antioxidant, and,
if desired,
1 to 3 % by weight of nutritionally acceptable lubricating agent, preferably starch as well as, if desired, other nutritionally acceptable additives, preferably a sugar and/or a sweetening agent.

The mixtures according to the invention are biologically active with a curative effect. If consumed by healthy people they promote the healthy nutrition and serve among others for the prevention of cardiovascular disorders. On the other hand for sick people the use of the salt mixtures of the invention may serve as a part of the therapy.

## Description

The present invention relates to a mixture poor in sodium comprising also potassium, magnesium and a mixture of vegetables and spices (on the term "spices" throughout the specification and claims those of plant origin are meant) replacing dietary salt, as well as to the use of this mixture as common salt or table salt for flavouring foods ready for consumption, for cooking, baking and preservation, as well as for preparing seasonings and other food products.

Salt demand is a natural need of human and of a number of animals; our meals are commonly prepared by using common salt, saltless food is favoured only by few.

The human organism needs common salt (NaCI) including its sodium ion content as the balance of the appropriate ions is the requisite of preventing disorders of many life processes. Sodium is contained in each tissue of the human body. Sodium is a permanent constituent of human blood. The normal sodium content of the blood amounts to 315-330 mg%. In order to develop and maintain a normal blood pressure a certain amount of sodium is to be consumed. According to the state of the art the daily sodium demand of a healthy adult is about 2.6 g corresponding to 5 to 15 g of common salt. It is very difficult to determine the necessary amount of daily consumption since it may be highly various depending individually on the mode of life, physical activity and age.

In addition to the sodium potassium and magnesium also represent important constituents of blood. In a healthy human, the blood contains 315 to 330 mg% of sodium, 16 to 22 mg% of potassium and 1 to 3 mg% of magnesium together with a chloride content of 350 to 390 mg%.

However, according to the results of the studies a significant part of the adult people consumes by far more salt than required, moreover, many of them consume manifold of the requirement.

The reason therefor lies therein that nearly each food contains salt in order to develop a suitable taste. By being accustomed to this it becomes natural not only to salt but also to oversalt the food. It also pertains to the situation that common salt is a cheap flavouring and preserving agent therefore preserved foods such as among others tinned foods and bagged soup, sauce and other compositions usually contain more salt and therefore sodium than necessary. According to the results of the same studies, it is stated that simultaneously with the overconsumption of sodium a too small amount of potassium and magnesium is consumed, what results in the break down of the ion balance of the organism in most people. The recent medical literature reports many pathological alterations induced by the break down of the ion balance. From these hypertension, degenerative cardiovascular diseases, edemas, skin disorders and the like were the first to get to the centre of interest.

Professor Dr. János Rigó, managing physician of the National Institute of Dietetics stated in 1991 [in his preface to the work of József Gonda entitled "Magyaros ízek zabpehellyel" ("Characteristical Hungarian Tastes with Oat Flake"), Hírhozó Ltd., Kecskemét 1991] the followings.

"It is a known fact that in our national nutrition the intake of minerals is characterized by an excess of sodium consumption and an insufficient potassium and magnesium consumption. The desirable ratio of (Na + Ca) to (K + Mg) is 1. This was found to be about 2.5 in our national nutrition."

The investigations have shown that a frequent phenomenon accompanying the diseases is the dominance of sodium (and partly of calcium) over other ions taking part in the ion balance, first of all over potassium and magnesium. According to the reports in the treatment of heart diseaes attempts were made at eliminating the excess of sodium by a diet containing potassium or ammonium salt.

It has also been reported that when using certain drugs, e.g. thiazides for the treatment of hypertension, potassium tablets were administered to counter-balance the overweight of sodium.

From the multitude of similar reports it becomes clear that the overweight of sodium can be brought into connection with several diseases.

However, if studying the reports it also becomes evident that, while balancing the sodium overweight, the ratio of other cations is frequently left unregarded, though these exert a dynamic effect under the actual conditions.

In other reports it has been stated that the presence of sufficient amounts of potassium and magnesium in the organism is a very important factor of the physical performance as well as of the state of heart and circulation. However, according to the observations, people live on a diet rather poor in potassium and magnesium what, in addition to the sodium load, can be one of the main reasons for the frequent development of cardiac arrhythmias and myocardial injuries. Thus, it would be very important to supply the organism sufficiently with potassium and magnesium and simultaneously to decrease the sodium load.

It has also been established that the potassium content of myocardium diminishes on ageing.

The administration of potassium alone did not work well in the prevention of the above disorders. It has been established that in addition to potassium a sufficient quantity of magnesium is also to be introduced to the organism, the ratio of sodium is to be diminished and an appropriate electrolyte composition is to be created.

It has been cleared up that the electrolyte solution flowing through the body is excreted partly with the sweat (during physical work or sport) whereas the most part thereof is eliminated by the kidneys. The maintenance of strongly various cation and anion contents in the cells (in the intracellular liquid) and in the extracellular spaces requires an active control, checking and regulation, wherein the effective and average re-supplementation, i.e. the supply of various components goes on within reasonable limits. Namely, if the supply of one or more cations is under or over the optimum limit values this leads directly or indirectly to an alteration and disorder in the respective organ as well as in other organs being in connection with the respective organ and with the functions of the system controlling the electrolyte system. This loading is perceived by the control system of the electrolyte system, which former intervenes, however, it cannot counterbalance great differences. One of the most important factors of the electrolyte system is the sodium supply. However, since a nearly permanent overweight of sodium exists, the supply shifts the electrolyte balance in such an extent that the difference between the optimum requirement and the actual consumption of sodium and potassium may reach even one whole order, i.e. an 8 to 10-times difference may occur; and simultaneously, the supply of potassium and magnesium often hardly reaches one tenth of the requirement.

Thus, it is not surprising that sudden deaths of heart origin induced by hypertension, alkalosis, stroke, cardiac arrhythmia or myocardial injuries become more and more frequent.

Those discussed above represent only a schematic and incomplete summary of the very remarkable medical literature devoted to the correlations between diseases and the composition of electrolyte. It is evident from this literature that the decrease in the overweight of sodium and calcium as well as restoration of the electrolyte balance, at least that of cations, are important factors of the therapy.

Simultaneously, it is also obvious that the ratio of the amount of sodium, important from the view-point of health, to other cations and the appropriate absolute quantity thereof may or might play an important role in the prevention of the above-said diseases, in the maintenance of health.

Obviously, from those discussed above, the key problem in this respect is to diminish the amount of sodium taken into the organism; and simultaneously, to assure the appropriate quantity and ratio of potassium and magnesium.

Since the excess of sodium is taken into the organism with the food, it seemed to be obvious to assure the appropriate amount of sodium by decreasing its amount in the food. According to the invention this is achieved by providing, instead of pure dietary salt, a salt mixture with a lower sodium chloride content, which mixture, due to its composition, in addition to its identical flavouring effect, is preferable from the view-point of health, too.

A number of experiments had been carried out to diminish the sodium excess and to replace sodium.

In the suggested solutions it was mainly tried to replace a part of sodium by potassium; whereas several solutions were directed to replace the whole amount of sodium by an other cation.

The state of the art is well characterized by the solutions described in five patent specifications, respectively, to be analyzed hereinafter.

Throughout the specification and claims on "percentage" percentage by weight is meant. Further, wherein the components of the salt mixture are concerned all substances marked are meant to be nutritionally acceptable.

In the Hungarian patent specification No. 162,570 a common salt-free (NaCI free) salt mixture is suggested, which comprises a mixture of potassium chloride and potassium citrate, applied within narrow weight ratios, and 1 to 3 % of glutamic acid or glutamate added thereto. It is stated that the separate components lose their individual, characteristically bitter or sour taste, respectively. Although this is true, the food prepared with the suggested mixture unfortunately do not have a good taste. Neither the composition prepared with the above salt mixture nor the same composition supplemented with 2 to 5 % of sodium chloride could not be successfully used in the practice to the aimed purpose and the aimed results were not obtained.

In the United States patent specification No. 4,473,595 a sodium-poor salt mixture is proposed which comprises 30 to 50 % of sodium chloride, 25 to 35% of potassium chloride and 15 to 25% of magnesium sulphate or magnesium chloride. It is stated that the proposed mixture, in particular if adding also 0.01% of potassium iodide to it, is suitable not only for replacing the common salt but has also such a strong taste intensity that for achieving the same taste effect an amount less by 10 to 30% is necessary as from the common salt.

Although the mixture according to the above patent has become commercially available, its taste is not really good.

In DE 3,418,664 A1 a sodium-poor mixture is disclosed which comprises 0 to 20% of sodium chloride, 35 to 50% of potassium chloride, 18 to 25% of potassium dihydrogen phosphate, 4 to 16% of glutamate, 1 to 5% of yeast autolysate and 0.2 to 10% of spices of plant origin. The taste of the above mixture is not perfect, its application fields are limited, due to its yeast content; it can be utilized in foods containing yeast (such as products of the baking industry) or in foods the taste of which masks the specific taste of the mixture (e.g. sausages and several cheeses).

The sodium-poor mixture described in DE 3.107,800 A1 comprises 0 to 50% of sodium chloride, 22.5 to 85% of potassium chloride, 0 to 35% of potassium sulphate, 1 to 8% of glutamate, 0.1 to 1% of nucleotide and 4 to 30% of sugar or sugar-substitute. The authors indicate as preferred embodiments those ones wherein the proportion of potassium chloride amounts to 65 to 75%, or 70 to 75%, respectively. Although they predict that the taste of the composition is a "salt taste similar to that of common salt", the masking of the bitter taste of the high quantity of potassium chloride remained unsuccessful.

In GB 2,015,864 a salt mixture containing 50 to 65% of sodium chloride, 20 to 40% of potassium chloride and 5 to 20% of magnesium chloride (or magnesium sulphate) is suggested as table salt. In principle, it could be possible to diminish the sodium load and to increase simultaneously the potassium and magnesium levels by using this mixture, however, the meal prepared therewith has a bad taste and, on the other hand, the particles of the mixture adhere to each other therefore, it is difficult to handle.

Compositions described in as many as 23 additional patent specifications are discussed in the above five patent specifications. This high number proves on the one hand the importance of the task to be solved and on the other hand the fact that till now no suitable solution could be found.

In addition thereto that none of the proposals result a mixture having a really acceptable taste for replacing sodium chloride, all the solutions differ from that of the present invention because they are not aimed to develop an appropriate balance of the ion ensemble of sodium, potassium and magnesium. The use of a magnesium salt is suggested only in U.S. 4,473,595 and GB 2,015,854, however, this is mainly proposed for masking the bitter taste of potassium chloride. Further, magnesium sulphate proposed is a strong laxative therefore the suitability of its use is strongly problematic; nor is the use of magnesium chloride rather preferable, namely these magnesium salts possess an unpleasant nauseating metallic taste. This property is one of the reasons for that the sea-water is undrinkable.

Thus, the aim of the present invention was to develop a mixture eliminating the above deficiencies. The object and the task of the invention was to develop a sodium-poor salt mixture which comprises a sufficient amount of potassium and magnesium in a delightful form which mixture is heat-resistant, does not adhere, is easy to handle, possesses a taste-effect and a taste intensity substantially identical to that of common salt, and can be used for any dietary purpose to which sodium chloride is used, e.g. for flavouring any food as table salt; as common salt for cooking, baking and for the preparation of any kind of preserved food products, without any limitation or for the preparation of food-seasonings, respectively.

For developing the salt mixture of the invention, a mixture of potassium chloride and potassium citrate was employed in spite of the fact that although according to the recognition serving as the basis of Hungarian patent No. 162,570 the above components should lose their own characteristic bitter and sour taste, respectively, in the mixture of potassium chloride and potassium citrate of proper ratio, the taste of the mixture is not good at all and the taste is unstable if the ratios are changed. However, we have recognized that the mixture should contain other components, too in addition to the above two components so as to make the taste acceptable and to achieve our further objects. For meeting the magnesium requirement the mixture should contain a sufficient amount of a magnesium salt usually having an unpleasant taste according to the known practice and in addition it should be savoury with a pleasant salt taste, otherwise its target of health protection cannot be accomplished since the food prepared therewith will unwillingly be accepted.

Now, it has unexpectedly been found that this difficult, multifold problem which has remained unsolved since decades can be solved by assuring the simultaneous presence of several conditions.

A part of our recognition resides therein that spices used besides salts for flavouring in the human nutrition contribute both to achieving the taste effect of a salt mixture and to enhance the salty taste, besides this they exert a beneficial health effect.

The recognition of the invention is that the object described above can be achieved by using salt mixtures, wherein
- only a part of sodium chloride is replaced by other components, where the quantity of sodium chloride applied represents a lower sodium intake into the organism than the quantity causing harm, but it plays already a role in the development of the taste-effect;
- in order to develop their salty taste a mixture of potassium chloride and potassium citrate is used in addition to sodium chloride, where potassium chloride and sodium chloride are employed in nearly identical quantities;
- the amount of magnesium required for the maintenance of health is provided as salts formed with nutritionally acceptable organic acids, preferably as magnesium glutamate or citrate instead of inorganic salts causing an unpleasant, food-extraneous taste;
- vegetables and spices are used for supplementing the taste-effect; and
- in order to enhance the taste-effect sodium glutamate is employed, the use of which to this purpose is known.

Nowadays it is already known that a significant part of the spices and vegetables is biologically active, and has a curative effect.

Thus, it is known that allspice and bay leaf promote the digestion. Similarly, the blood pressure-lowering, arteriosclerosis-inhibiting, gallbladder- and liver-function-promoting effects of garlic are known. The diuretic and digestion-promoting effects of the lovage leaf as well as the diuretic effect of parsley root and leaf, parsnip root, onion and celery are similarly known.

It has been found that one of the preconditions for achieving a health restoring effect and preventing diseases lies besides the appropriate ion intake in the intake of suitable plants of curative effect, these plants make simultaneously possible to achieve a sufficient taste-effect. Their proportions in the mixture according to the invention amounts to 10 to 15%.

The curative spice and vegetable plants listed below and used in a dried and powdered form were found to be advantageous when used in the percentages indicated below. Of course, depending on the individual, regional or national taste, other spices and/or vegetables can be employed in addition to those listed below.

It has been found that, based on the above recognition, the salt mixture of the following compositions meet the object of the invention.

| | |
|---|---|
| Sodium chloride | 20-40%, |
| potassium chloride | 20-40 %, |
| potassium citrate | 10-20 %, |
| organic magnesium salt | 0.6-1%, |
| mixture of vegetables and spices | 10-15%, |
| sodium glutamate | 5-8%, and if desired |
| antioxidant, | 0.03-0.20%, and if desired |
| lubricating agent, e.g. starch | 1-3%, |

as well as, if desired, other nutritionally acceptable additives, e.g. sugar and/or sweetening agents.

Preferably, the mixture of spices and vegetables comprise the following dried and powdered components related to the amount of the total salt mixture
at most 0.3% of red paprika,
at most 0.4% of chives,
at most 0.3% of garlic,
at most 3 0% of onion,
at most 0.3% of white pepper,
at most 0.3% of allspice,
at most 0.3% of bay leaf,
at most 0.5% of lovage leaf,
at most 0.3% of saffron,
at most 0.5% of celery leaf,
at most 3.0% of celery tuber,
at most 3.0% of carrot,
at most 0.5% of parsley leaf,
at most 3.0% of parsley root and
at most 2.5% of parsnip root.
wherein it is not required the use of all listed spices and vegetables, but the simultaneous use of spices and vegetables is necessary. The combination of spices and vegetables is optional and is defined by the individual taste. the nature of the actual product, and in some cases by health reasons (e.g. allergy). Other spices and vegetables not listed above can also be employed within the whole quantity of 10 to 15% as indicated above, in addition to or instead of those mentioned above.

The salt mixtures according to the invention can be used as common and/or table salt, for cooking, baking or for the preparation of semi-finished or finished preserved foods or seasonings.

As mixtures of vegetables and spices mixtures prepared from individual vegetables and spices or commercially available known compositions of spices and vegetables used as seasonings comprising vegetables and spices may be applied, such as e.g. the spice/vegetable mixtures as follows (trade names): "Knorr" (manufacturer: CPC Magyarország Inc., Szeged under the licence of Knorr Nährmittel AG, Switzerland), "Vegeta" or "Podravka" (manufacturer: Podravka Inc., Koprivnica, Croatia), "Super Veg" (manufacturer: GYR Ltd., Szeged), "Delikát" (manufacturer: CPC Magyarország Inc., Szeged) or "Boszorkány" (manufacturer: Szegedi Paprika Inc., Szeged), however other products may also be taken in consideration.

In such cases the quality and quantity of the salt and spice ingredients of the commercial composition to be used should be taken into account when preparing the salt mixtures, and the respective composition should be employed in such an amount that the salt and spice content does not exceed the defined limits; and the amount and ratio of the most important spice and vegetable components approximate the preferred range of the invention, further, the total amount of spices and vegetables be within 10 to 15%.

The attention should repeatedly be called to those said above because the salt content of the commercially available compositions usually exceeds to a significant degree the level defined for the mixtures according to the invention and beneficial for the health.

Suitable anions of the magnesium salts are nutritionally acceptable anions, especially anions of organic acids, preferably citrate, ascorbate, lactate, gluconate, glutamate and aspartate, in particular glutamate and citrate.

Advantageously, the mixture contains also an antioxidant, e.g. ascorbic acid or an equivalent quantity of an other substance of the same effect, such as a citrate salt or ester or tocopherol. An amount of 0.03 to 0.20% of antioxidant was found to be preferred.

It has also been found to be advantageous if the salt mixture contained a lubricating agent, e.g. starch, (particularly wheat or potato starch) in an amount of 1 to 3%.

If desired, other additive(s) such as sugars, e.g. glucose, fructose, lactose, beet-sugar, cane-sugar or sugar-substitutes such as cyclamate or sorbitol can be added to the mixture.

It is thought to be important that the amount and composition of additives have no deteriorating influence on the taste- and biological effects of the mixture. Thus, the additives are employed in such amounts which do not influence the taste of the salt mixtures and are innocuous from the view-point of hygiene and nutrition, these amounts are known to a person skilled in the art.

The mixture according to the invention can favourably be used as table salt or for cooking, baking or preservation, e.g. in the cooking of meals or for after-flavouring, e.g. for the preparation of soups, salads, meats, for salting meats, for mixing pastes, sauces, soup powders and spiced spreads and in the preparation of baked products.

It has been found that the mixture according to the invention should be used in the same amount in which sodium chloride would be employed. This means in the kitchen techniques that, instead of the summarized amount of salt usually introduced for salting and the salt content of seasonings frequently used besides, only the salt mixture of the invention is used in the usual amount of the common salt. Thus, besides the decreased sodium chloride content of the mixture of the invention the intake of the amount of sodium chloride otherwise used in the separate seasonings is also avoided.

This is an important advantage of the mixtures according to the invention since the housewifes need not alter their habits of salting and, the meal becomes tasty with a simultaneous decrease of the sodium load and sufficient supplementation of potassium and magnesium, further, a more healthy nutrition becomes possible.

The salt mixture according to the invention can be used not only for cooking and baking but it is useful also for the direct flavouring of foods at consumption, e.g. a buttered bread "salted" with the mixture has a very good taste.

Patients requiring a diet, in particular sick persons suffering from heart disease or cardiovascular disorders can advantageously utilize this mixture. The mixture is preferred as supplementary therapy in the treatment of heart decompensation, heart edemas, clinical pictures accompanied by salt retention, hypertension, arrhythmias after infarction, angina pectoris, potassium loss induced by diuretics or any states accompanied by potassium or magnesium loss and the like, as well as in the prevention of risk of myocardium infarction.

By using the mixture according to the invention a sufficient state of cardiovascular patients can be adjusted or maintained in balance by using lower amounts of drugs. This is important also because the risk of the possible adverse side effects of drugs is decreased.

An other advantage of using the mixture according to the invention lies therein that a prescribed fat- and carbohydrate-poor diet is easy to combine with a salt-poor diet whereas the food remains savoury.

However, a very essential advantage of using a mixture according to the invention appears therein that, when consumed by healthy people, the habitual and permanent use thereof contributes to maintaining the health and to prevent the development of the diseases mentioned above.

An other benefit of the mixture according to the invention resides therein that, within defined limits, it provides a possibility to modify the composition according to the demands of individual, regional and national tastes without endangering the physiological aims or taste-effect wanted to achieve by the invention.

A still other advantage of the invention lies in that the firms manufacturing foods, e.g. preserved foods can flavour their products without an essential alteration of their receipts. Thereby the better promotion of the healthy nutrition becomes possible with the simultaneous maintenance of the taste of their products familiar to the customers.

The invention will be illustrated in more detail by the following non-limiting Examples. All the percentage values mean percentage by weight.

The compositions of "mixtures of vegetables and spices" occurring in the compositions a) to e) of Examples 1 to 4 are shown in columns I to IV of Example 5, whereas the number of the mixture used is indicated in parentheses behind the percentage value.

### Example 1

Mixtures are prepared with the following components:

| | **a** | **b** | **c** |
|---|---|---|---|
| Sodium glutamate | 5.00 | 5.34 | 7.34 |
| Sodium chloride | 32.00 | 39.00 | 35.80 |
| Potassium chloride | 39.00 | 29.00 | 25.00 |
| Potassium citrate | 10.00 | 15.00 | 17.00 |
| Magnesium citrate | 0.70 | 0.63 | 0.66 |
| Ascorbic acid | - | - | 0.20 |
| Tocopherol | - | 0.03 | - |
| Starch | 2.00 | 1.00 | - |
| Mixtures of vegetables and spices | 11.30(I)* | 10.00(IV)* | 14.00(II)* |
| Total | 100.00 | 100.00 | 100.00 |

| | | | |
|---|---|---|---|
| Note: *: Its composition is given in Example 5. | | | |

### Cooking experiment:

Cumin seed soup is cooked with the mixture according to a)
For 5 persons the receipt is as follows:
- Ingredients:: 30 g of oat flake meal or wheat meal
1 g of cumin seed
1 tea-spoon of red paprika
2 tea-spoons of salt mixture according to above a)
50 ml of edible oil.

The meal is toasted to sandy in the edible oil, taken away from the fire, the cumin seed and red paprika are added, then water is added to the required volume, and the mixture is boiled up. Then one tea-spoon of the salt-substitute mixture is added, boiled for about 1 minute and subsequently, the other half of the mixture is added.

Salting is of course an action to taste; this relates also to the use of the mixture according to the invention. The mixture is used in the same amount as the salt would be employed.

A similar procedure is followed with the use of the mixtures having the compositions according to b) and c), respectively.

### Example 2

Mixtures are prepared from the following components:

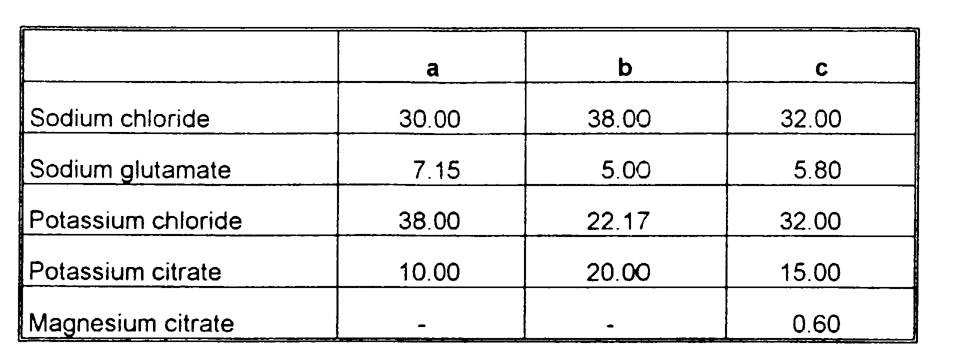

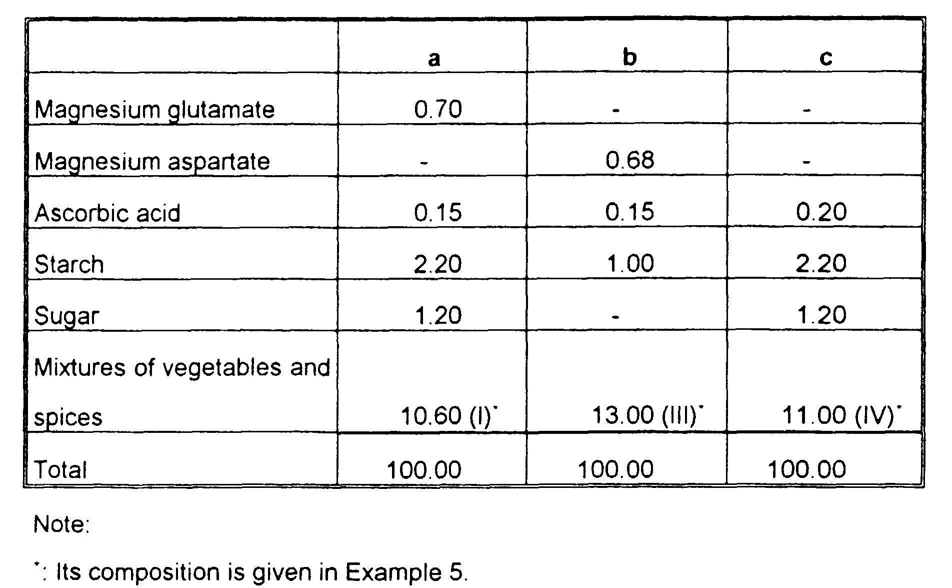

### Cooking experiment:

A pork goulash is cooked for 5 persons.
- Ingredients:: 0.5 kg of pork
100 ml of edible oil
1 table-spoon of red paprika
1 small onion
1 tea-spoon of salt-substitute mixture according to above b)
2 tea-spoons of letcho (dish made of stewed tomatoes, paprika and onions).

The onion is grated, steamed in sunflower oil, then taken away from the fire and the salt free letcho and the pork cut to cubes are added. The mixture is toasted in its own broth for a few minutes while mixing, then is filled up with water, half of the salt-substitute mixture is added and the meal is cooked until tender. The other half of the mixture according to the invention is placed into the finished meal. The same procedure is followed with the use of the mixtures having the composition according to a) and c), respectively.

### Example 3

Mixtures are prepared from the following components:

| | **a** | **b** | **c** | **d** | **e** |
|---|---|---|---|---|---|
| Sodium chloride | 36.00 | 34.00 | 32.60 | 38.00 | 36.00 |
| Sodium glutamate | 6.00 | 5.80 | 5.00 | 5.90 | 5.90 |
| Potassium chloride | 26.50 | 32.70 | 29.70 | 20.00 | 22.20 |
| Potassium citrate | 19.20 | 15.30 | 19.22 | 20.00 | 20.00 |
| Magnesium citrate | 0.65 | 0.70 | 0.73 | 1.00 | 0.80 |
| Ascorbic acid | 0.20 | 0.20 | 0.15 | 0.10 | 0.10 |
| Starch | 1.00 | 1.00 | 2.00 | 1.00 | 2.00 |
| Mixtures of vegetables and spices | 10.45(I)* | 10.30(IV)* | 10.60(IV)* | 14.00(II)* | 13.00(III)* |
| Total | 100.00 | 100.00 | 100.00 | 100.00 | 100.00 |

| | | | | | |
|---|---|---|---|---|---|
| Note: *: Its composition is given in Example 5. | | | | | |

### Cooking experiment:

Layered cauliflower is prepared with oat-flake for 5 persons.
- Ingredients:: 1 kg of cauliflower
2 tea-spoons of salt-substitute mixture according to c)
50 g of cheese
1 tea-spoon of red paprika
100 ml of sour cream
150 g of oat-flake
1 egg
30 g of leg pork, minced
100 ml of edible oil.

The cauliflower is separated to its roses and brewed with water. Into the cooking broth about 50 g of bread are placed, which are removed after cooking. (The bread sucks in itself the unpleasant odour of cauliflower.) The cauliflower is cooked for a few minutes, then filtered and halved. The onion is grated, steamed in the oil, paprika and the prepared minced pork are added, and the mixture according to the invention is mixed to. The oat-flake is toasted to golden yellow in the remained oil set aside to this purpose, and is mixed with the egg. The pork and egg mixture obtained is placed between the separated cauliflower layers. The top of the meal is sprinkled with grated cheese, the meal is baked in oven and finally, it is dashed with the sour cream.

A similar procedure is followed with the use of the mixtures having the composition according to a), b) and e), respectively.

### Example 4

The following mixtures are prepared:

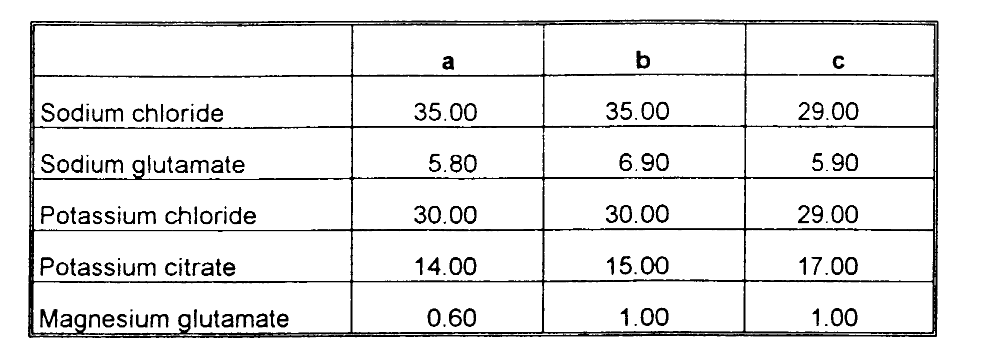

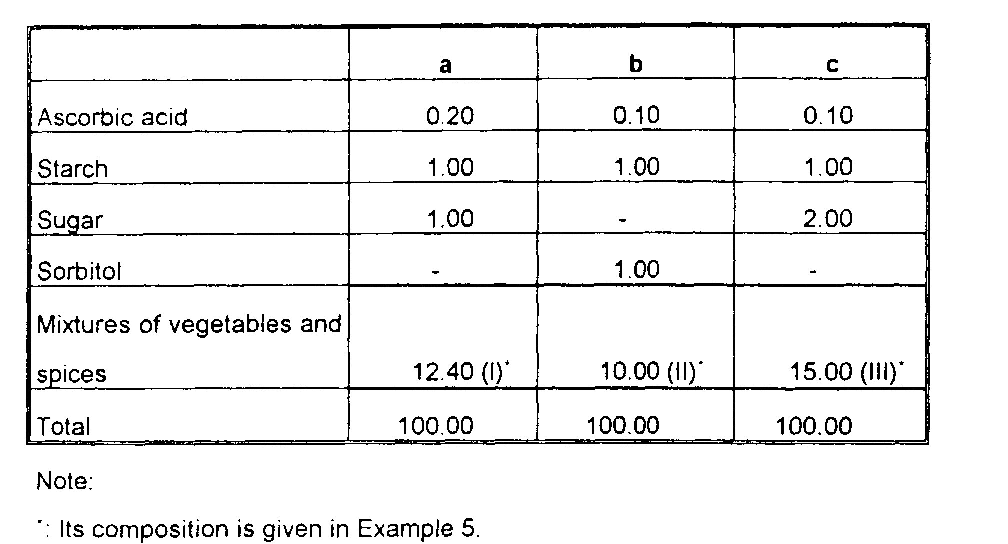

- Baking experiment:: Small unsweetened round cakes are baked with the mixture according to the invention.
- Ingredients:: 200 g of margarine
400 g of meal
1 egg
10 g of yeast
Sour cream according to taste
Milk according to taste
1 table-spoon of salt-substitute mixture with composition according to a).

The yeast is dissolved in a small volume of milk, the margarine is crushed together with the meal, the egg, the yeast suspension and the mixture according to the invention are added and the whole mixture is kneaded together with the sour cream until a plastic mass is obtained. The cake is let to stand for one hour, then rolled out and folded at least twice (from right to left, from left to right, down and up) to make it flaky. After rolling out it is cut out to taste, its top is hacked with a knife, smeared with egg and the cake is baked.

A similar procedure is followed with the use of the mixtures having the composition according to b) or c), respectively.

After being made up in suitable package units in a known manner, the salt mixtures of the invention, e.g. those of Examples 1 to 4, respectively, may be put on the market as seasonings, may be utilized in the households or for manufacturing foods on industrial scale, among others for the preparation of soup powders, sauces and other foods, for preservation of foods as well as for direct seasoning.

### Example 5

Mixtures of spices and vegetables are prepared from the following components (quantities given as percentages by weight):

| | **I** | **II** | **III** | **IV** |
|---|---|---|---|---|
| Red paprika | 2.00 | - | 3.00 | 2.00 |
| Chives | - | 3.00 | 2.00 | 2.00 |
| Garlic | - | 1.00 | 1.00 | 2.00 |
| Onion | 10.00 | 10.00 | 10.00 | 10.00 |
| White pepper | 1.00 | 1.00 | 1.00 | 1.00 |
| Allspice | 1.00 | 1.00 | 1.00 | 1.00 |
| Bay leaf | 1.00 | - | 1.00 | 1.00 |
| Lovage leaf | 3.00 | 2.00 | 2.00 | 3.00 |
| Saffron | 1.00 | 1.0 | 1.00 | 1.00 |
| Celery leaf | 2.00 | 2.00 | 2.00 | 2.00 |
| Celery tuber | 12.00 | 16.00 | 15.00 | 15.00 |
| Carrot | 22.00 | 19.00 | 27.00 | 20.00 |
| Parsley leaf | 4.00 | 4.00 | 4.00 | 3.00 |
| Parsley root | 21.00 | 30.00 | 20.00 | 20.00 |
| Pasternak root | 20.00 | 10.00 | 10.00 | 17.00 |
| Total | 100.00 | 100.00 | 100.00 | 100.00 |

## Claims

1. A salt mixture poor in sodium, comprising also potassium and magnesium and a mixture of vegetables and spices and, if desired, nutritionally acceptable additives for the substitution of dietary salt, which comprises
20 to 40 % by weight of sodium chloride,
20 to 40 % by weight of potassium chloride,
10 to 20 % by weight of potassium citrate,
0.6 to 1 % by weight of nutritionally acceptable organic magnesium salt,
10 to 15 % by weight of a mixture of vegetables and spices,
5 to 8 % by weight of sodium glutamate and, if desired,
0.03 to 0.20 % by weight of nutritionally acceptable antioxidant, and,
if desired,
1 to 3 % by weight of nutritionally acceptable lubricating agent, preferably starch, as well as, if desired, other nutritionally acceptable additives, preferably a sugar and/or a sweetening agent.

2. A salt mixture according to claim 1, which comprises as organic magnesium salt magnesium citrate, glutamate, aspartate or lactate.

3. A salt mixture according to claim 1 or 2, which comprises related to the total amount of the salt mixture
at most 0.3% by weight of red paprika,
at most 0.4% by weight of chives,
at most 0.3% by weight of garlic,
at most 3.0% by weight of onion,
at most 0.3 % by weight of white pepper,
at most 0.3 % by weight of allspice,
at most 0.3% by weight of bay leaf,
at most 0 5% by weight of lovage leaf,
at most 0.3% by weight of saffron,
at most 0.5 % by weight of celery leaf,
at most 3.0 % by weight of celery tuber,
at most 3.0% by weight of carrot,
at most 0.5% by weight of parsley leaf,
at most 3.0% by weight of parsley root and
at most 2.5% by weight of parsnip root,
originating from the dried and powdered mixture of spices and vegetables.

4. A salt mixture according to any of the claims 1 to 3, wherein the mixture of vegetables and spices comprises onion, white pepper, allspice, lovage leaf, saffron, celery tuber, celery leaf, carrot, parsley leaf, parsley root and parsnip root.

5. Use of a salt mixture according to any of the claims 1 to 4 as common salt and/or table salt.

6. Use of a salt mixture according to any of the claims 1 to 4 for the preparation of a baked product.

7. Use of a salt mixture according to any of the claims 1 to 4 for the preparation of preserved semi-finished or finished foods.

8. Use of a salt mixture according to any of the claims 1 to 4 for the preparation of seasonings, soup powders or sauce powders.
